# EUROPEAN PATENT APPLICATION

(11) **EP 1 923 580 A2**
(43) Date of publication of application: **21.05.2008**
(21) Application number: 07254380.4
(22) Date of filing: 06.11.2007
(51) Int. Cl.: F16B 19/10

(54) **Petal type blind rivet**

(30) Priority: 20.11.2006 JP 2006312429
(71) Applicant: Pias Sales Co., Ltd., Osaka (JP)
(72) Inventor: Cyochi, Hideto, Kagoshima-shi, Kagoshima (JP)
(74) Representative: Price, Paul Anthony King

(57) **Abstract**

To present a petal type blind rivet capable of assuring a stable tightening force regardless of variation in hardness of the object member to be tightened. A rivet main body (2) has a hole (9) of a diameter B smaller than a diameter A of an insertion hole (8) of a shell (3) provided at the side of a flange head (4), a stopping shoulder (10) being formed in the inner bottom of the insertion hole (8). A mandrel (5) shaft (6) has a thick part (11) of a diameter slightly smaller than diameter A of the insertion hole (8), which part is formed adjacent the mandrel head (7), and a thin part (12) adjacent to the thick part (11) and inserted into the small hole (9). By pulling the shaft (6) of the mandrel (5) inserted in the shell (3) and extracting it until the end face (11a) of the thick part (11) abuts against the stopping shoulder (10), the opening (18) at the other end of the shell (3) is torn apart by cutting blades (16) to form a plurality of leg pieces (19), the tearing length of which is nearly constant, and the spreading diameter C of the plurality of the leg pieces (19) spreading like petals can be specified.

## Description

### Technical Field to which the Invention Belongs

The present invention relates to a blind rivet, and more particularly to a petal type blind rivet suited for fixing a member of a relatively soft material, such as a ceramic fire wall member called siding, to a support frame.

### Related Background Art

A petal type blind rivet includes a rivet main body having a flange head at one end of a cylindrical shell, and a mandrel having a head expanded at one end of a shaft inserted and assembled in the shell, and a plurality of cutting edges extending radially are provided in the downside portion of the mandrel head, and by pulling the shaft inserted in the shell, the other end opening of the shell is torn open by the cutting edges, and an object member is tightened between a plurality of leg pieces spreading like petals and the flange head (see, for example, patent documents 1, 2 and 3).

By using such petal type blind rivet, if attempted to fix a ceramic fire wall member mentioned as mentioned above to a support frame, the following problems occur.

In order to avoid exposure of tightening tool or blind rivet to the surface of fire wall member, the petal type blind rivet is inserted in a blind hole with a bottom provided at the back side of the fire wall member, and a mandrel is pulled, and the other end opening of the shell is torn open by the cutting edges to form a plurality of leg pieces, which are spreading like petals within the fire wall member, but since the hardness of the fire wall member is not uniform, if the mandrel is pulled with a uniform force, the tearing length of the leg pieces varies, and the spreading diameter of the plural leg pieces spreading like petals varies, and the tightening force is not stable, and the reliability is low.
[Patent document 1] Japanese Patent Application Laid-Open No. H2-26305
[Patent document 2] Japanese Patent Application Laid-Open No. H10-274220
[Patent document 3] Japanese Patent Application Laid-Open No. 2000-346023

### Summary of the Invention

The invention is devised to address the above problems, and hence preferred embodiments provide a petal type blind rivet uniform in tearing length of a plurality of leg pieces spreading like petals, being formed by tearing open the other end opening of the shell of the rivet main body by a plurality of cutting edges provided in the downside portion of a mandrel head, regardless of variation of hardness of an object to be tightened, and also uniform in the spreading diameter of the plurality of leg pieces, and stable in the tightening force.

The invention presents a petal type blind rivet including a rivet main body having a flange head at one end of a cylindrical shell, and a mandrel having a head expanded at one end of a shaft inserted and assembled in the shell, in which a plurality of cutting edges extending radially are provided in the downside portion of the mandrel head, and by pulling the shaft inserted in the shell, the other end opening of the shell is torn open by the cutting edges, and an object member is tightened between a plurality of leg pieces spreading like petals and the flange head, a small hole of smaller diameter than the diameter of an insertion hole of the shell is provided at the flange head side of the rivet main body, and a stopping shoulder is formed in the inner bottom of the insertion hole, the shaft of the mandrel has a thick shaft of slightly smaller diameter than the insertion hole consecutive to the mandrel head, and a thin shaft consecutive to the thick shaft and inserted in the small hole, and a rupture portion is formed in the thin shaft, and by pulling the shaft of the mandrel inserted in the shell and drawing out until the end face of the thick shaft abuts against the stopping shoulder, the tearing lengths of the plurality of leg pieces formed by tearing open the other end opening of the shell by the cutting edges are set nearly uniform, and the spreading diameters of the plurality of leg pieces spreading like petals are kept almost uniform.

In this configuration, the length of the legs of the rivet main body are fixed, and the length of the thick shaft of the mandrel is regulated, and the tearing length of the leg pieces can be selected and changed, and a specified tightening force can be easily assured by varying the spreading diameter of the plurality of leg pieces.

Further, a press-fit large shaft of slightly larger diameter than the insertion hole of the shell of rivet main body is provided immediately beneath the mandrel head, and the press-fit thick shaft is press-fitted, and stopped and held in the other end opening of the shell, so that the mandrel inserted and assembled in the shell and the rivet main body can be formed integrally.

In the petal type blind rivet of the invention, a small hole of smaller diameter than the diameter of an insertion hole of the shell is provided at the flange head side of the rivet main body, and a stopping shoulder is formed in the inner bottom of the insertion hole, and the shaft of the mandrel has a thick shaft of slightly smaller diameter than the insertion hole consecutive to the mandrel head, and a thin shaft consecutive to the thick shaft and inserted in the small hole, and a rupture portion is formed in the thin shaft, and therefore by pulling the shaft of the mandrel inserted in the shell and drawing out until the end face of the thick shaft abuts against the stopping shoulder, the tearing lengths of the plurality of leg pieces formed by tearing open the other end opening of the shell by the cutting edges are set nearly uniform, and the spreading diameters of the plurality of leg pieces spreading like petals are kept almost uniform, so that a stable tightening force is obtained regardless of variation of harness of a material of the object to be tightened.

According to the invention as set forth in claim 2, by adjusting the tearing length of the plurality of leg pieces, a specified tightening force is obtained easily.

Therefore, the blind rivet of the invention is suited for fixing a ceramic fire wall member not uniform in hardness, to a support frame, by fitting into a blind hole with a bottom provided at its back side, and is capable of assuring a specified tightening force and enhancing the reliability of tightening force.

### Brief Description of the Drawings

Fig. 1 is a partial longitudinal sectional front view of petal type blind rivet of the preferred embodiment of the invention.
Fig. 2 is a longitudinal sectional front view of the rivet main body.
Fig. 3 is a front view of mandrel of the same.
Fig. 4 is an arrow sectional view along line 4-4 in Fig. 3.
Fig. 5 is a longitudinal sectional front view showing an example of use of the petal type blind rivet.
Fig. 6 is a longitudinal sectional front view showing other example of use of the petal type blind rivet.

### Description of the Reference Numerals

- 1: Petal type blind rivet
- 2: Rivet main body
- 3: Shell
- 4: Flange head
- 5: Mandrel
- 6: Shaft
- 7: Mandrel head
- 8: Insertion hole
- 9: Small hole
- 10: Stopping shoulder
- 11: Thick shaft
- 12: Thin shaft
- 13: Rupture portion
- 14: Upper end
- 15: Downside portion
- 16: Cutting blade
- 17: Press-fitting thick shaft
- 18: Other end opening
- 19: Leg piece
- 21: Fire wall member
- 22: Support frame
- 23: Mounting hole (blind hole)
- 24: Mounting hole

### Description of Preferred Embodiments

Embodiments of the invention are specifically described below.

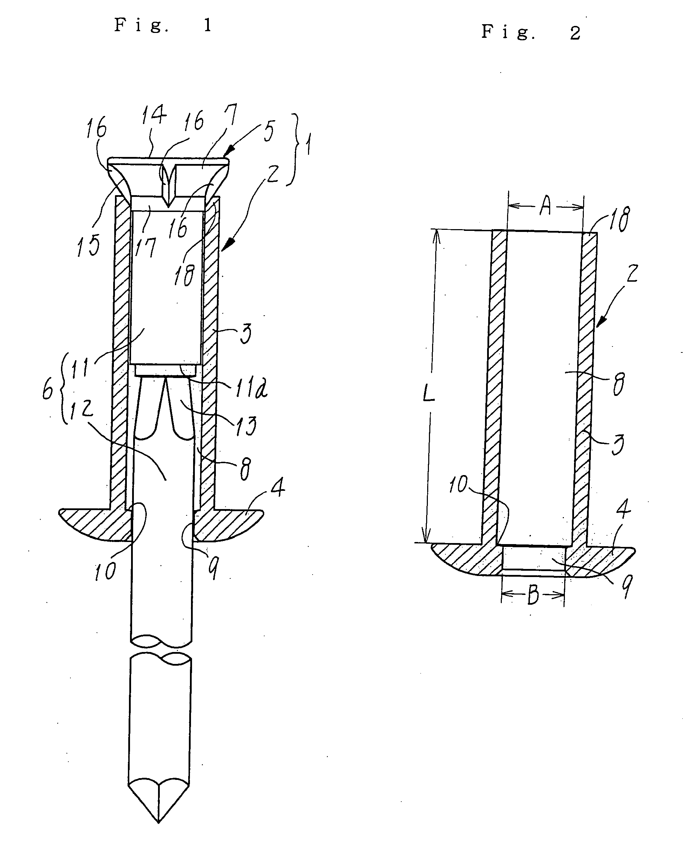

Fig. 1 shows a petal type blind rivet 1 of the preferred embodiment of the invention. The blind rivet 1 includes a rivet main body 2 having a flange head 4 at one end of a cylindrical shell 3, and a mandrel 5 having a head 7 expanded at one end of a shaft 6 inserted and assembled into the shell 3 from other end opening 18. The rivet main body 2 and mandrel 5 are manufactured by rolling and forming a metal material such as high carbon steel, and may be preferably manufactured by using stainless steel where corrosion resistance is demanded in particular.

The rivet main body 2 is formed as shown in Fig. 2, in which a small hole 9 having a smaller diameter B than diameter A of insertion hole 8 of the shell 3 is provided at the flange head 4 side, and a stopping shoulder 10 is formed in the inner bottom of the insertion hole 8.

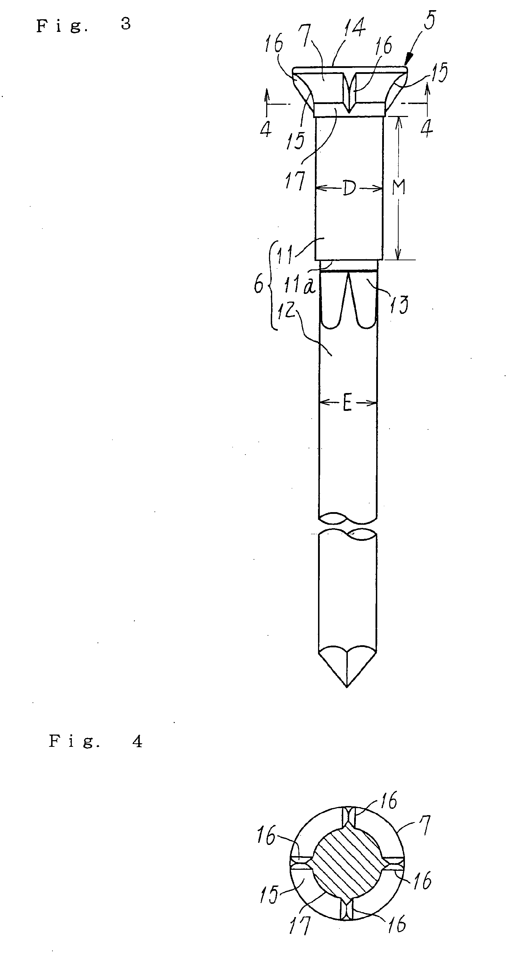

The mandrel 5 is formed as shown in Fig. 3, in which the shaft 6 is consecutive to the mandrel head 7, having a thick shaft 11 of diameter D slightly smaller than diameter A of the insertion hole 8 of the rivet main body 2, and a thin shaft 12 consecutive to the thick shaft 11 and having diameter E slightly smaller than diameter D inserted into the small hole 9, and a rupture portion 13 for tearing apart is provided in the boundary region of the thick shaft 11 and thin shaft 12.

Length M of the thick shaft 11 is set shorter than length L of the shell 3 (that is, the depth of the insertion hole 8), and by varying length L of the thick shaft 11 relatively to length L of the shell 3 as described below, it is possible to change the tearing length of a plurality of leg pieces formed by tearing apart the other end opening 18 of the shell 3.

The mandrel head 7 has an upper end 14 of flat plane having a slightly larger diameter than the outside diameter of the shell 3 of the rivet main body 2, and its downside portion 15 is formed like a trumpet gradually increasing in diameter toward the peripheral edge of the upper end 14 from the outer circumference of the shaft 6. As shown in Fig. 3, four cutting blades 16 extending radially are provided in the trumpet-shaped downside portion 15 by projecting in a V-section. Between the downside portion 15 and the thick shaft 11 of the shaft 6, a press-fitting thick shaft 17 of slightly larger diameter than diameter A of insertion hole 8 of the shell 3 is provided, and when the shaft 6 of the mandrel 5 is inserted into the insertion hole 8 of the shell 3 from the other end opening 18, and assembled in the rivet main body 2, the press-fitting thick shaft 17 is press-fitted into the other end opening 18 of the shell 3, and is stopped and held, so that the rivet main body 2 and mandrel 5 are formed integrally.

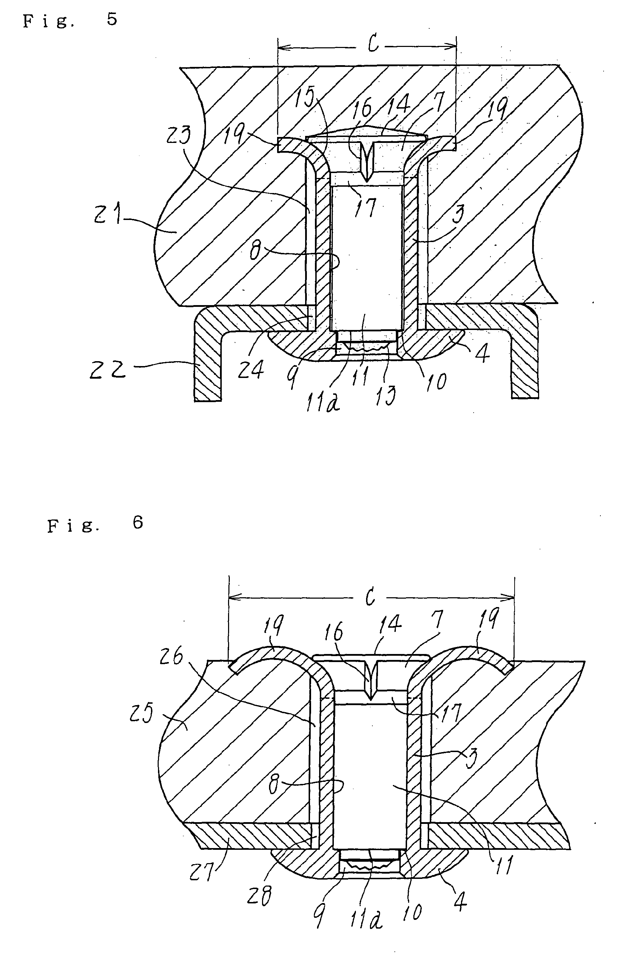

Fig. 5 shows an example of use by affixing a ceramic fire wall member 21 called siding to a support frame 22, by using the petal type blind rivet 1 having the configuration as described above.

The fire wall member 21 is preliminarily provided with a mounting hole (blind hole) 23 with bottom from the back side. The shell 3 of the rivet main body 2 is inserted into the mounting hole (blind hole) 23 through a mounting hole 24 of the support frame 22 from the side of the head 7 of the mandrel 5 assembled in the rivet main body 2, and by pulling the shaft 6 (11, 12) of the mandrel 5 while pressing the flange head 4 to the support frame 22, the other end opening 18 of the shell 3 is torn by the cutting blades 16, and a plurality of (four) leg pieces 19 are formed, and the leg pieces 19 are spread like petals along the trumpet-shaped downside portion 15 of the mandrel head 7. When the shaft 6 is extracted until the end face 11a of the thick shaft 11 abuts against the stopping shoulder 10 in the inner bottom of the insertion hole 8, the torn leg pieces 19 are formed in a specified length, and the plurality of leg pieces 19 spreading like petals are opened to a predetermined diameter C, and the fire wall member 21 and support frame 22 are tightened and fixed between the plurality of leg pieces 19 spread to the predetermined diameter C and the flange head 4. Therefore, regardless of variation of hardness of the fire wall member 21, a stable and specified tightening force is assured. On the other hand, by pulling the shaft 6, the thin shaft 12 is torn apart and separated from the rupture portion 13, and the mandrel head 7 and thick shaft 11 are press-fitted and held in the shell 3 of the rivet main body 2.

In this configuration, by fixing length L of the shell 3 of rivet main body 2, and varying length M of the thick shaft 11 of mandrel 5, the tearing length of leg pieces 19 can be adjusted, and a specified tightening force can be obtained easily. Also by fixing length M of the thick shaft 11, and varying length L of the shell 3 of the rivet main body 2, the tearing length of leg pieces 19 can be adjusted.

Fig. 6 shows other embodiment. A through-hole 26 is provided in an object member 25 of thin thickness, and the petal type blind rivet 1 of the invention is inserted and tightened in the through-hole 26 by way of a mounting hole 28 of a support member 27, and the plurality of leg pieces 19 formed by tearing the other end opening 18 of the shell 3 by the cutting blades 16 are spread like petals on the surface of the object member 25, and the object member 25 and the support member 27 are tightened and fixed between the plurality of leg pieces 19 spread to a specified diameter C and the flange head 4.

In the embodiment, the downside portion 15 of the mandrel head 7 is formed like a trumpet shape, but may be also formed like a conical trapezoidal shape spreading upward.

## Claims

1. A petal type blind rivet comprising a rivet main body having a flange head at one end of a cylindrical shell, and a mandrel having a head expanded at one end of a shaft inserted and assembled in the shell, wherein a plurality of cutting edges extending radially are provided in the downside portion of the mandrel head and, by pulling the shaft inserted in the shell, the other end opening of the shell is torn open by the cutting edges, and an object member is tightened between a plurality of leg pieces spreading like petals and the flange head,
a small hole of smaller diameter than the diameter of an insertion hole of the shell is provided at the flange head side of the rivet main body, and a stopping shoulder is formed in the inner bottom of the insertion hole,
the shaft of the mandrel has a thick shaft of slightly smaller diameter than the insertion hole consecutive to the mandrel head, and a thin shaft consecutive to the thick shaft and inserted in the small hole, and a rupture portion is formed in the thin shaft, and
by pulling the shaft of the mandrel inserted in the shell and drawing out until the end face of the thick shaft abuts against the stopping shoulder, the tearing lengths of the plurality of leg pieces formed by tearing open the other end opening of the shell by the cutting edges are set nearly uniform, and the spreading diameters of the plurality of leg pieces spreading like petals are kept almost uniform.

2. The petal type blind rivet of claim 1, wherein the length of the shell of the rivet main body is fixed, and the length of the thick shaft of the mandrel is regulated, so that the tearing length of the leg pieces is selectable and changeable.

3. The petal type blind rivet of claim 1 or 2, wherein a press-fitting thick shaft of slightly larger diameter than the insertion hole of the shell is provided immediately beneath the mandrel head, and the press-fitting thick shaft of the mandrel inserted in the shell is press-fitted, and stopped and held in the other end opening of the shell.
